(19) Europäisches Patentamt
European Patent Office
Office européen des brevets

(11) **EP 4 776 368 A2**

(12) **EUROPÄISCHE PATENTANMELDUNG**

(43) Veröffentlichungstag:
**15.07.2026  Patentblatt 2026/29**

(51) Internationale Patentklassifikation (IPC):
**H01M 10/0525** (2010.01)     **H01M 10/48** (2006.01)

(21) Anmeldenummer: **25206232.8**

(52) Gemeinsame Patentklassifikation (CPC):
**H01M 10/48; H01M 10/0525**

(22) Anmeldetag: **02.10.2025**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **15.10.2024  DE 102024209970**

(71) Anmelder: **Forschungszentrum Jülich GmbH
52428 Jülich (DE)**

(72) Erfinder:
• **Dr. Tempel, Hermann
  52372 Kreuzau (DE)**

• **Prof. Dr. Eichel, Rüdiger-A.
  52428 Jülich (DE)**
• **Dr. de Haart, Lambertus Gerardus Johannes
  6291 EA Vaals (NL)**
• **Solanki, Pankaj
  52428 Jülich (DE)**
• **Dr. Raijmakers, Luc
  5912 HH Venlo (NL)**
• **Ali, Haider Adel
  52062 Aachen (DE)**

(74) Vertreter: **Gille Hrabal Partnerschaftsgesellschaft mbB
Patentanwälte
Brucknerstraße 20
40593 Düsseldorf (DE)**

(54) **VERFAHREN ZUR HERSTELLUNG EINER REFERENZELEKTRODE, AKKUMULATOR UND SYSTEM**

(57)    Die Erfindung betrifft ein Verfahren zur Herstellung einer Referenzelektrode (1), wobei eine Aufschlämmung (6) mit aktivem Material, elektrisch leitendem Material und Bindemittel zur Herstellung der Elektrode wenigstens 12 Stunden lang getrocknet wird.

Die Erfindung betrifft einen Akkumulator mit einer Anode (16), einer Kathode (17), einem Elektrolyten und einer Referenzelektrode (1), wobei die Referenzelektrode (1) zylinderförmig ist und aus aktivem Material, elektrisch leitendem Material und Bindemittel gebildet ist und im Inneren einen aus Metall bestehenden Draht (2) als Stromkollektor umfasst.

Die Erfindung betrifft ein System mit dem Akkumulator und einem Batteriemanagementsystem, das in Abhängigkeit von der Referenzelektrode steuert oder überwacht.

FIG. 6

EP 4 776 368 A2

EP 4 776 368 A2

**Beschreibung**

Die Erfindung betrifft ein Verfahren zur Herstellung einer Referenzelektrode und eine Batterie wie zum Beispiel einen Akkumulator mit einer verfahrensgemäß hergestellten Referenzelektrode. Die Erfindung betrifft außerdem ein System mit dem Akkumulator.

Ein Akkumulator ist eine wiederaufladbare Batterie, bei der eine elektrische Potentialdifferenz zwischen Anode und Kathode des Akkumulators zur Stromerzeugung genutzt werden kann. Anode und Kathode können durch einen elektronenundurchlässigen Separator des Akkumulators getrennt sein. Außerdem befindet sich ein Elektrolyt des Akkumulators zwischen Anode und Kathode. Für ein Aufladen können Ionen wie zum Beispiel Lithiumionen ($Li^+$) von der Kathode durch den Elektrolyten und den Separator hindurch zur Anode gelangen. Für ein Entladen gelangen Ionen zurück von der Anode zur Kathode. Dann können Elektronen über einen externen Stromkreis durch einen Verbraucher hindurch von der Anode zur Kathode fließen.

Zwischen einer Elektrode (also der Anode oder der Kathode) und dem Elektrolyten bildet sich ein sogenanntes Elektrodenpotential aus. Für die Messung eines Elektrodenpotentials wird eine zweite Elektrode benötig. Dafür kann eine Referenzelektrode vorgesehen sein, die ein konstantes Elektrodenpotential aufweisen sollte, um eine Vergleichsmessung zu ermöglichen. Ein Elektrodenpotential bei einem Akkumulator messen zu können, kann für Forschungszwecke oder für den Betrieb von Batteriemanagementsystemen von Interesse sein.

Es ist Aufgabe der vorliegenden Erfindung, eine Referenzelektrode für einen Akkumulator mit vorteilhaften Eigenschaften zu schaffen. Weiter ist es Aufgabe der Erfindung, einen Akkumulator mit einer hergestellten Referenzelektrode bereitzustellen.

Die Aufgabe der Erfindung wird durch ein Verfahren mit den Merkmalen des ersten Anspruchs sowie durch einen Akkumulator mit den Merkmalen des nebengeordneten Anspruchs gelöst. Die abhängigen Ansprüche betreffen vorteilhafte Ausgestaltungen.

Für die Herstellung einer Referenzelektrode kann eine Aufschlämmung, die aktives Material, umfassen kann, sehr langsam getrocknet werden, um eine gut geeignete Referenzelektrode zu erhalten. Es kann wenigstens 4 Stunden oder wenigstens 6 Stunden oder wenigstens 12 Stunden lang oder wenigstens 24 Stunden lang oder wenigstens 48 Stunden lang getrocknet werden. Es reduziert sich also wenigstens 12 Stunden lang oder wenigstens 24 Stunden lang oder wenigstens 48 Stunden lang oder wenigstens 60 Stunden lang die Feuchtigkeit der Aufschlämmung. Wird weniger lang getrocknet, dann ist die Aufschlämmung nicht vollständig trocken. Es kann beispielsweise dann nach wie vor ein Lösungsmittel entweichen. Durch das Trocknen kann ein Lösungsmittel der noch nicht getrockneten Aufschlämmung verdampfen. Es hat sich herausgestellt, dass das langsame Trocknen grundsätzlich ein entscheidender Schritt ist, um eine gut geeignete Referenzelektrode herstellen zu können.

Für ein Trocknen kann die Aufschlämmung mit einem optional darin befindlichen Stromkollektor einem Unterdruck ausgesetzt werden. Die Aufschlämmung mit dem darin optional befindlichen Stromkollektor kann beispielsweise in einem Abzug durchgeführt werden, aus dem ein größerer Volumenstrom abgeführt als ihm zugeführt wird. Das Trocknen kann bei Raumtemperatur durchgeführt werden. Die Temperatur kann während des Trocknens wenigstens 15°C oder 18°C betragen. Die Temperatur kann während des Trocknens nicht mehr als 40°C oder nicht mehr als 30°C oder nicht mehr als 25°C betragen. Es kann so wenigstens 12 Stunden oder wenigstens 18 Stunden oder wenigstens 24 Stunden lang getrocknet werden. Es kann so nicht länger als 48 Stunden oder nicht länger als 36 Stunden oder nicht länger als 30 Stunden lang getrocknet werden. Das Trocknen kann zum Beispiel in einem Abzug durchgeführt werden.

Insbesondere im Anschluss an das Trocknen bei der Temperatur zwischen 15°C und 40°C oder im Anschluss an ein erstes wenigstens 12 Stunden langes Trocknen kann bei einer Temperatur getrocknet werden, die mehr als 40°C oder mehr als 60°C oder mehr als 70°C betragen kann. Die Temperatur kann dann für das Trocknen weniger als 100°C oder weniger als 90°C betragen. Es kann so wenigstens 12 Stunden oder wenigstens 18 Stunden oder wenigstens 24 Stunden lang getrocknet werden. Es kann so nicht länger als 48 Stunden oder nicht länger als 36 Stunden oder nicht länger als 30 Stunden lang getrocknet werden. Es kann in einem Vakuumofen getrocknet werden.

Die Aufschlämmung kann durch Strangpressen oder Spritzguss in eine gewünschte Form der Referenzelektrode gebracht worden sein. Die Aufschlämmung kann durch Strangpressen oder Spritzguss auf einen elektrischen Leiter, also auf einem Stromkollektor, in der gewünschten Form aufgebracht worden sein. Im Anschluss daran kann das Trocknen durchgeführt werden. Die Aufschlämmung kann durch Strangpressen oder Spritzguss in einem Schritt in der endgültig gewünschten Dicke auf den elektrischen Leiter aufgebracht worden sein. Im Anschluss daran kann das Trocknen durchgeführt werden. Es kann sein, dass in mehreren Schritten beispielsweise durch Strangpressen oder Spritzguss aufgetragen und nach jedem Schritt getrocknet wird, um durch Trocknung entstehende Risse zu vermeiden. Risse können zur Folge haben, dass Elektrodenpotentiale verfälscht werden und/oder die Kapazität der Elektrode reduziert wird. Es soll daher primär eine dichte Schicht durch das Trocknen der Aufschlämmung erreicht werden. Von Vorteil ist es darüber hinaus, eine gleichmäßig dicke Beschichtung beispielsweise auf einem elektrischen Leiter bzw. Stromkollektor erzielen zu können. Neben seiner stromleitenden Funktion kann der elektrische Leiter als Substrat für die Aufschlämmung dienen. Der elektrische Leiter kann sich über die gesamte Länge der Beschichtung erstrecken. Es kann aber auch eine kürzere Länge genügen. Ein Substrat innerhalb der Aufschlämmung ist aber nicht zwingend erforderlich. Ein elektrischer Leiter für die Elektrode und damit ein elektrischer Kontakt kann an der Elektrode beispielsweise lediglich angelötet worden sein. Auf dem elektrischen Leiter kann eine Elektrode durch Beschichtung hergestellt worden sein. Der elektrische Leiter kann aus Kupfer bestehen. Der elektrische Leiter kann ein Draht, ein Band oder ein Gitter sein.

Im Anschluss an das Trocknen kann die Referenzelektrode durch Lithiierung sowie Delithiierung formiert und/oder aktiviert werden. Die Referenzelektrode kann in einer Zelle aktiviert werden, die ein oder zwei Elektroden als Gegenelektroden umfassen kann. Die ein oder zwei Gegenelektroden können vollständig oder zum Teil aus Lithium bestehen. Durch das Vorsehen einer zweiten Gegenelektrode kann vorteilhaft ein durch die Referenzelektrode entstehendes Überpotential vermieden werden. Die zweite Gegenelektrode kann aus Metall bestehen. Die Referenzelektrode kann mit beispielsweise zwei oder drei Formationszyklen bei niedrigem Strom formiert und/oder aktiviert werden. Während der Formationszyklen kann beispielsweise bei 1,55 V oder 3,42 V ein flaches Spannungsplateau beobachtet werden. Das Spannungsplateau kann von der Elektrodenchemie abhängen. Für LTO kann die Spannung 1,55 V betragen. Für LFP kann die Spannung 3,42 V betragen.

In einem letzten Formationszyklus kann die Referenzelektrode auf einen Ladezustand von etwa 50% aufgeladen werden, was in der Mitte des flachen Spannungsplateaus liegen kann.

Die Aufschlämmung kann als aktives Material ein Material mit einem flachen Elektrodenpotenzial umfassen, um eine stabile Referenzelektrode erhalten zu können. Die Aufschlämmung kann deshalb **LFP** oder LTO als aktives Material umfassen, also Lithiumeisenphosphat oder Lithiumtitanat. Die Aufschlämmung kann deshalb lithiiertes Titanoxid als aktives Material umfassen.

Der Anteil des aktiven Materials in der Aufschlämmung kann wenigstens 50 Gewichtsprozent oder wenigstens 60 Gewichtsprozent betragen. Der Anteil des aktiven Materials in der Aufschlämmung kann nicht mehr als 98 Gewichtsprozent oder nicht mehr als 95 Gewichtsprozent oder nicht mehr als 90 Gewichtsprozent oder nicht mehr als 80 Gewichtsprozent betragen.

Zwar kann der Anteil des aktiven Materials in der Aufschlämmung auch weniger als 50 Gewichtsprozent betragen. Ein zu geringer Anteil an aktivem Material in der Aufschlämmung führt jedoch nachteilhaft dazu, dass der Materialaufwand für die Herstellung einer Referenzelektrode mit geeignet großer Kapazität unnötig hoch wird.

Die Aufschlämmung kann ein elektrisch leitendes Material wie Kohlenstoff umfassen. Anstelle von Kohlenstoff kann ein elektrisch leitendes Polymer eingesetzt sein. Als elektrisch leitendes Material können Metallpartikel wie zum Beispiel aus Gold oder Aluminium bestehende Partikel verwendet worden sein. Kohlenstoff ist besonders zu bevorzugen.

Der Anteil des elektrisch leitenden Materials in der Aufschlämmung kann wenigstens 1 Gewichtsprozent oder wenigstens 5 Gewichtsprozent oder wenigstens 10 Gewichtsprozent betragen. Der Anteil des elektrisch leitenden Materials in der Aufschlämmung kann nicht mehr als 30 Gewichtsprozent oder nicht mehr als 25 Gewichtsprozent oder nicht mehr als 20 Gewichtsprozent betragen. Ein zu geringer Anteil an elektrisch leitendem Material verhindert eine gewünschte elektrische Kontaktierung. Ein zu hoher Anteil an elektrisch leitendem Material führt zu einem unnötig hohen Materialaufwand.

Die Aufschlämmung kann ein Bindemittel umfassen. Der Anteil an Bindemittel in der Aufschlämmung kann wenigstens 1 Gewichtsprozent oder wenigstens 5 Gewichtsprozent oder wenigstens 10 Gewichtsprozent betragen. Der Anteil an Bindemittel in der Aufschlämmung kann nicht mehr als 30 Gewichtsprozent oder nicht mehr als 25 Gewichtsprozent oder nicht mehr als 20 Gewichtsprozent betragen. Ein zu geringer Anteil an Bindemittel hat zu große mechanische Instabilitäten zur Folge. Ein zu hoher Anteil an Bindemittel führt zu einem unnötig hohen Materialaufwand.

Als Bindemittel kann Polyvinylidenfluorid, Carboxymethylcellulose, Polyethylen oder Polytetrafluorethylen ausgewählt worden sein. Als Bindemittel können wasserbasierte Bindemittel wie Xanthan gum, Locust bean gun, oder Guar gum ausgewählt werden.

Die Aufschlämmung kann ein Lösungsmittel umfassen. Es kann sich um ein Lösungsmittel für ein Bindemittel handeln. Beispielsweise kann das Bindemittel zunächst in dem Lösungsmittel gelöst, teilweise gelöst und/oder dispergiert worden sein.

Als Lösungsmittel kann N-Methyl-2-pyrrolidon (NMP), Alkohol oder Wasser verwendet worden sein. Das Lösungsmittel kann so ausgesucht worden sein, dass das Bindemittel zumindest teilweise in dem Lösungsmittel gelöst werden kann. Vorzugsweise ist das Lösungsmittel so ausgesucht, dass das Bindemittel vollständig in dem Lösungsmittel gelöst werden kann.

Das Lösungsmittel kann so ausgesucht sein, dass das aktive Material und/oder das elektrisch leitfähige Material nicht gelöst, sondern in der Aufschlämmung lediglich dispergiert werden.

Die genannten Anteile beziehen sich auf die Feststoffe, die zur Herstellung der Aufschlämmung eingesetzt worden sind. Bei der Bestimmung der vorgenannten Anteile in der Aufschlämmung wird das Lösungsmittel also nicht berücksichtigt. Eine Aufschlämmung kann also beispielsweise aktives Material mit einem Anteil von 70 Gewichtsprozent oder einem Anteil von 80 Gewichtsprozent, elektrisch leitendes Material mit einem Anteil von 15 Gewichtsprozent oder mit einem Anteil von 10 Gewichtsprozent und Bindemittel mit einem Anteil von 15 Gewichtsprozent oder mit einem Anteil von 10 Gewichtsprozent umfassen. Hinzu kommt dann das Lösungsmittel. Die Menge an Lösungsmittel in der Aufschlämmung kann so gewählt worden sein, dass die Aufschlämmung zähflüssig ist. In der getrockneten Referenzelektrode kann die Beschichtung eines Drahts dann aus ca. 70 Gewichtsprozent oder 80 Gewichtsprozent aktivem Material, ca. 15 Gewichtsprozent oder ca. 10 Gewichtsprozent elektrisch leitfähigem Material und ca. 15 Gewichtsprozent oder ca. 10 Gewichtsprozent Bindemittel bestehen.

Um die Aufschlämmung herzustellen, können pulverförmiges aktives Material, pulverförmiges elektrisch leitfähiges Material und pulverförmiges Bindemittel miteinander vermischt worden sein. Im Anschluss daran kann die Mischung mit Lösungsmittel vermischt worden sein. Es kann aber auch zunächst Bindemittel in dem Lösungsmittel gelöst worden sein. Im Anschluss daran können aktives Material und elektrisch leitfähiges Material in der Lösung dispergiert worden sein.

Im Anschluss an das Trocknen bei der Temperatur zwischen 40°C und 100°C kann bei einer Temperatur wenigstens 12 Stunden lang getrocknet werden, die zwischen 100°C und 140°C liegt.

In der Aufschlämmung kann ein Stromkollektor während der Trocknung hineinreichen. Der Stromkollektor kann aus Kupfer bestehen. Der Stromkollektor kann ein Draht sein. Der Draht kann wenigstens 50 Mikrometer oder wenigstens 100 Mikrometer dick sein. Der Draht kann nicht dicker als 300 Mikrometer oder nicht dicker als 1000 Mikrometer sein. Der Draht kann wenigstens 5 mm oder wenigstens 40 mm lang sein. Der Draht kann nicht länger als 70 mm sein.

Die Aufschlämmung kann vor dem Trocknen eine Schicht auf dem Stromkollektor bilden, die wenigstens 0,5 mm dick oder wenigstens 50 Micrometer ist und/oder die maximal 3 mm dick ist.

Das Verhältnis von aktivem Material, Kohlenstoff und Bindemittel kann zwischen 50:15:25 und 90:5:5 liegen. Das Verhältnis von aktivem Material, Kohlenstoff und Bindemittel kann zwischen 50:25:25 und 98:1:1 liegen. Das Verhältnis von aktivem Material, Kohlenstoff und Bindemittel kann zwischen 60:20:20 und 80:10:10 liegen.

Die Erfindung betrifft auch einen Akkumulator mit einer Anode, einer Kathode, einem Elektrolyten und einer Referenzelektrode. Die Referenzelektrode kann nach einem zuvor beschriebenen Verfahren herstellbar sein oder hergestellt worden sein. Die Referenzelektrode kann zylinderförmig sein. Die Referenzelektrode kann aus aktivem Material, Kohlenstoff und Bindemittel gebildet sein. Im Inneren der Referenzelektrode kann es einen aus Metall bestehenden Draht geben. Der Draht kann als Stromkollektor dienen. Ist die Referenzelektrode zylinderförmig, dann ist der Akkumulator ebenfalls bevorzugt zylinderförmig. Ein Akkumulator sowie die Referenzelektrode können aber auch anders geformt sein. Andere Formen sind ebenfalls möglich. So kann der Akkumulator eine Pouch-Zelle oder prismatisch geformt sein. Eine für eine Pouch-Zelle besonders gut geeignete Referenzelektrode kann flach geformt sein. Der Akkumulator kann wie ein T geformt sein. Der Akkumulator kann eine für Testzellen typische Form aufweisen.

Die Kapazität der Referenzelektrode wird zweckmäßig so ausgewählt, dass Langzeitmessungen möglich sind. Eine Referenzelektrode kann während der Messungen entladen oder geladen werden und benötigt dann für Langzeitmessungen eine relativ große Kapazität. Eine hinreichend große Kapazität für die Referenzelektrode kann auf Basis des durchschnittlichen Entladestroms oder Ladestroms und der spezifischen Kapazität des aktiven Materials wie LTO oder **LFP** berechnet werden. Ein durchschnittlicher Entladestrom oder Ladestrom kann beispielsweise basierend auf einer Spannungsdifferenz zwischen der Referenzelektrode, der Anode des Akkumulators und der Eingangsimpedanz eines Messgeräts von 1 MOhm berechnet werden.

Um Langzeitmessungen im Fall eines typischen zylinderförmigen Akkumulators durchführen zu können, kann die Referenzelektrode wenigstens 40 mm oder wenigstens 50 mm lang sein. Um in einem typischen zylinderförmigen Akkumulator untergebracht werden zu können, kann die Referenzelektrode nicht länger als 150 mm oder nicht länger als 100 mm oder nicht länger als 70 mm oder nicht länger als 60 mm sein. Die Referenzelektrode kann beispielsweise ca. 55 mm lang sein. Der Durchmesser der Referenzelektrode kann wenigstens 0,1 mm oder wenigstens 0,5 mm oder wenigstens 1 mm oder wenigstens 1,5 mm oder wenigstens 5 mm oder wenigstens 10 mm betragen. Der Durchmesser der Referenzelektrode kann nicht mehr als 15 mm oder nicht mehr als 10 mm oder nicht mehr als 3 mm oder nicht mehr als 2,5 mm betragen. Der Durchmesser der Referenzelektrode kann beispielsweise ca. 2 mm betragen.

Der Durchmesser eines Drahts innerhalb der Referenzelektrode kann wenigstens 100 Mikrometer oder wenigstens 150 Mikrometer betragen. Der Durchmesser eines Drahts innerhalb der Referenzelektrode kann nicht mehr als 1000 Mikrometer oder nicht mehr als 800 Mikrometer oder nicht mehr als 300 Mikrometer oder nicht mehr als 250 Mikrometer betragen. Der Durchmesser eines Drahts innerhalb der Referenzelektrode kann ca. 200 Mikrometer oder ca. 400 Mikrometer betragen.

Die Referenzelektrode kann LTO als aktives Material mit einem Anteil von wenigstens 70 Gewichtsprozent oder mit einem Anteil von wenigstens 80 Gewichtsprozent umfassen.

Ein typischer zylinderförmiger Akkumulator kann 21 mm oder 50 mm oder 65 mm oder 70 mm oder 80 mm lang sein. Ein typischer zylinderförmiger Akkumulator kann zwischen 21 mm und 80 mm lang sein. Der Durchmesser eines typischen zylinderförmigen Akkumulators kann 7 mm oder 18 mm oder 21 mm oder 26 mm oder 32 mm oder 64 mm betragen. Der Durchmesser eines typischen zylinderförmigen Akkumulators kann 7 mm bis 64 mm betragen.

Ein Lithiumionen - Akkumulator kann eine aus $Li_xC_n$ gebildete Anode umfassen. Die Kathode eines Lithiumionen - Akkus kann aus einer Übergangsmetallverbindung gebildet sein. Die Übergangsmetallverbindung kann aus einem Oxid oder Phosphat gebildet sein.

Mit einer Referenzelektrode kann das Anodenpotenzial während (Schnell)laden gemessen werden, was hilfreich ist, um ein Batteriemanagementsystemen bei der Vermeidung von Lithium-Plating zu unterstützen. Eine Referenzelektrode kann auch zur Bestimmung des Kapazitätsverlusts der Elektroden im Laufe der Betriebszeit verwendet werden, was Informationen für die Bestimmung des Gesundheitszustands (State-of-Health, SoH) liefern sowie als Beitrag für physikalisch basierte Batteriemodelle dienen kann.

Eine Referenzelektrode kann in verschiedenen Lithiumionen-Batteriechemien wie zum Beispiel in Lithium-Eisenphosphat (LFP), Lithium-Nickel-Mangan-Kobaltoxid (NMC) und Lithium-Nickel-Kobalt-Aluminiumoxid (NCA) eingesetzt sein. Eine Referenzelektrode kann in unterschiedlichen geometrischen Akkudesigns eingesetzt sein wie zum Beispiel in zylindrischen Zellen, Beutelzellen sowie Knopfzellen. Eine Referenzelektrode kann eine prismatische Zelle oder typische (Labor) Testzelle sein.

Eine Referenzelektrode kann synthetisiert werden. Eine Referenzelektrode kann in verschiedenen geometrischen Formen wie Punkt, Kreis, Ring, Lochscheibe und Draht auf einen Stromkollektor aufgetragen werden. Eine Referenzelektrode kann eine zylindrische Geometrie aufweisen.

Eine Referenzelektrode kann zwischen der negativen und der positiven Elektrode eingefügt sein.

Eine Referenzelektrode kann klein sein, um die Komponenten eines Akkus nicht zu beeinträchtigen und um einen nachteilhaften Abschirm-/Blockierungseffekt für Ionen zu minimieren.

Eine Referenzelektrode kann außerhalb eines Batterieelektrodenstapels angeordnet sein. In diesem Fall liegt die Referenzelektrode außerhalb des Gleichstrompfades zwischen der negativen und der positiven Elektrode, also zwischen der Anode und der Kathode bzw. im Gleichstrompfad zwischen der Anode und der Kathode.

Bei einer zylindrischen Form eines Akkumulators, also bei zylindrischen Zellen, kann eine Referenzelektrode zwischen den Elektroden, um die Elektroden herum oder in der Mitte der zylindrischen Zelle platziert werden. Um eine Referenzelektrode in der Mitte der zylindrischen Zelle einzuführen, ist eine zylinderförmige Referenzelektrode ideal, die perfekt in die Mitte der Zelle passt. Bei einer zylindrischen Form eines Akkumulators, also bei zylindrischen Zellen, kann eine Referenzelektrode in einem Leerraum der zylindrischen Zelle platziert werden.

Die Erfindung betrifft auch einen Akkumulator mit einem Batteriemanagementsystem. Der Akkumulator umfasst eine Referenzelektrode. Es sind dann unter wechselnden Betriebsbedingungen präzise und langzeitstabile Spannungsmessungen möglich. Durch die Referenzelektrode kann das Batteriemanagementsystem eine präzise Überwachung eines Elektrodenpotenzials durchführen, was zu einer verbesserten Leistung und Lebensdauer des Akkumulators führen kann. Es kann die Kapazität des Akkumulators besser ausgenutzt werden. Ein solches System kann eine Vielzahl von Akkumulatoren mit einer Vielzahl von Referenzelektrode umfassen, die beispielsweise elektrisch in Serie und/oder parallel miteinander verbunden sein können.

Das Batteriemanagementsystem kann beispielsweise so eingerichtet sein, dass ein Laden des Akkumulators von dem Batteriemanagementsystem gesteuert wird. Es kann also sein, dass das Batteriemanagementsystem so eingerichtet ist, dass das Laden des Akkumulators unter anderem in Abhängigkeit von einer Messung durchgeführt wird, die mithilfe der Referenzelektrode durchgeführt wird.

Eine Referenzelektrode kann zur Messung von einzelnen Elektrodenpotenzialen unter Gleichstrom Lade- und Entladebedingungen verwendet werden. Eine Referenzelektrode kann zur Messung von einzelnen Elektrodenkapazitäten unter Gleichstrom Lade- und Entladebedingungen verwendet werden. C-Raten von 0,2 C sind dann beispielsweise möglich. Andere C-Raten sind ebenfalls möglich. Durch die Referenzelektrode kann beispielsweise ein Kapazitätsverlust eines Akkumulators im Langzeitbetrieb ermittelt werden. Eine C-Rate bezeichnet den auf die Nennkapazität eines Akkumulators in Amperestunden (Ah) bezogenen Lade- oder Entladestrom. Dies gibt Aufschluss darüber, wie stark ein Akkumulator maximal entladen werden darf.

Eine geeignete Dicke einer Referenzelektrode, welche beispielsweise die Kapazität einer Referenzelektrode mitbestimmen kann, kann in Abhängigkeit von der Zahl an gewünschten Lade- und Entladezyklen oder Batterielebensdauer eines Akkumulators beispielsweise durch Berechnung oder durch Versuche ermittelt werden.

Der durchschnittliche (Ent-)Ladestrom kann basierend auf der durchschnittlichen Spannungsdifferenz zwischen der Referenzelektrode und der Anode (beispielsweise für eine LTO Referenzelektrode und einer aus Graphit (C6) gebildeten Anode) und der Eingangsimpedanz eines Messgeräts von 1 MOhm berechnet werden. Nachfolgend wird eine Beispielrechnung zur Berechnung der Größe der Referenzelektrode bei Verwendung eines Messgeräts mit einer Eingangsimpedanz von 1 MOhm, das die Spannungsdifferenz zwischen LTO-Referenzelektrode und Graphitanode (C6) misst, angegeben. Es können durchschnittliche Spannungswerte für die LTO- und C6-Elektroden ermittelt werden. Dabei kann von einem Messzeitraum von einem Jahr (8760 h) ausgegangen werden.

Die Spannungsdifferenz V_diff zwischen LTO- und C6-Elektroden ist in einem Beispielsfall wie folgt berechnet worden:

$$V\_diff = V\_LTO - V\_(C\_6) = 1.55 - 0.12 = 1.43 \text{ V}.$$

Der Strom i wurde bei Verwendung des Messgeräts mit 1 MOhm Eingangsimpedanz (Z) berechnet wie folgt berechnet:

$$i = V\_diff/Z = 1.43/(1 \cdot 10^6) = 1.43 \text{ µA}$$

Basierend auf dem Strom wurde die erforderliche Kapazität C_RE für ein Jahr Messzeit wie folgt berechnet:

$$C\_RE = 1.43 \cdot 10^{-6} * 8760 = 12.5 \text{ mAh.}$$

Unter Berücksichtigung der theoretischen spezifischen Kapazität von LTO (C_LTO) von 175 mAh/g und unter Berücksichtigung des Durchschnittsgewichts m_RE (nur der LTO-Anteil ist dabei zu berücksichtigen) der Referenzelektroden mit 2 mm Dicke und 55 mm Länge (0.154 g) ergibt sich die folgende (theoretische) Kapazität C_RE:

$$C\_RE = C\_LTO^{(th,sp)} * m\_RE = 175 * 0.154 = 26.95 \text{ mAh ,}$$

was ungefähr zweimal mehr ist als die 12,5 mAh, die in einem Jahr von der Referenzelektrode (ent)laden werden kann. Dadurch ist es möglich, die Referenzelektrode während der Aktivierung auf die Hälfte des SoC aufzuladen, wo das stabile Potenzial von beispielsweise 1,55 V gefunden werden kann.

In der Realität wird die theoretische Kapazität jedoch nicht erreicht. In diesem Fall kann die Elektrode nicht auf die Hälfte ihrer Kapazität aufgeladen werden, sondern auf eine Kapazität, die zu einer stabilen Referenzelektrodenspannung passen kann und die für eine einjährige Messzeit reicht.

Eine Gesundheitszustandsschätzung könnte beispielsweise durch Messung einer Kapazität einer einzelnen Elektrode bei niedrigem Strom erfolgen. Der Gesundheitszustand kann berechnet werden, indem die tatsächlich gemessene Kapazität durch die Kapazität zu Beginn des Lebens dividiert wird.

Nachfolgend wird die Erfindung anhand Figuren näher erläutert. Es zeigen:

| | |
|---|---|
| Figur 1: | Referenzelektrode; |
| Figur 2: | Form mit eingefüllter Aufschlämmung; |
| Figur 3: | Form mit eingefüllter Aufschlämmung und eingelegtem Draht; |
| Figur 4: | zusammengefügte Formen mit eingefüllter Aufschlämmung und eingelegtem Draht; |
| Figur 5: | Aktivierungszelle; |
| Figur 6: | Akkumulator mit Referenzelektrode; |
| Figur 7: | Referenzelektrode mit beschichtetem Draht; |
| Figur 8: | technische Zeichnung von Gussform; |
| Figur 9: | technische Zeichnung von Gussform; |
| Figur 10: | technische Zeichnung von Aktivierungszelle; |
| Figur 11: | technische Zeichnung von Aktivierungszelle; |
| Figur 12: | Formierung und Aktivierung einer Referenzelektrode; |
| Figuren 13 und 14: | Konzeptnachweis. |

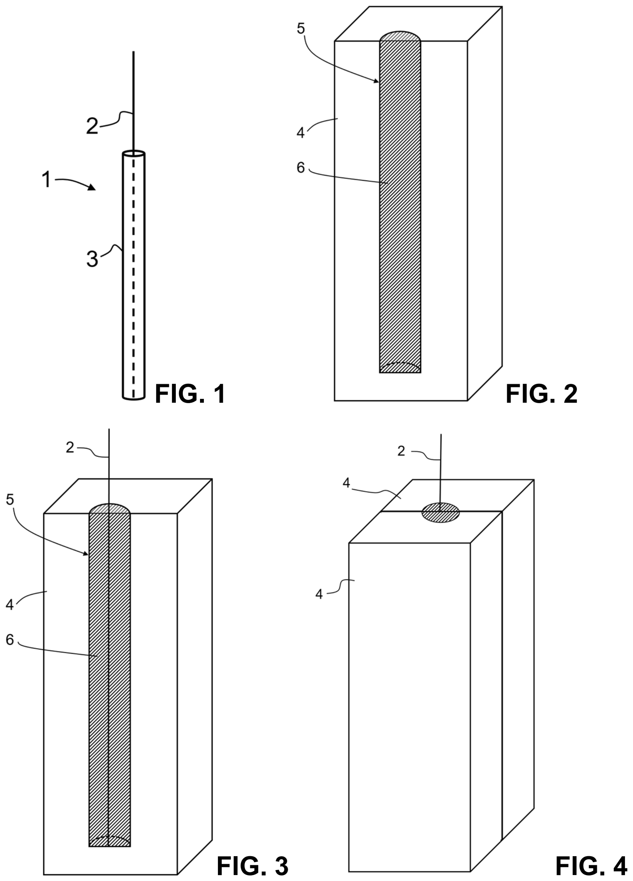

Die Figur 1 zeigt ein Beispiel für eine Referenzelektrode 1. Die Referenzelektrode kann einen Draht 2 umfassen, der an einer Seite aus einer Ummantelung 3 der Referenzelektrode 1 herausführt ist. Die Ummantelung 3 kann zylinderförmig sein. Der Draht 1 kann zentral durch die zylinderförmige Ummantelung 3 bis zum Grund der Ummantelung hindurchführen, also an einer Stirnseite der Ummantelung 3 enden. Die zylinderförmige Ummantelung 3 kann 55 mm lang sein. Der Durchmesser der Ummantelung 3 kann 2 mm betragen. Die Ummantelung 3 kann aus Lithiumtitanoxid (LTO)

bzw. Li$_4$Ti$_5$O$_{12}$, Kohlenstoff und Polyvinylidenfluorid (PVDF) gebildet worden sein. Die Ummantelung 3 kann aus 70 Gew.-% LTO oder 80 Gew.-% LTO, 10 Gew.-% Kohlenstoff oder15 Gew.-% Kohlenstoff und 15 Gew.-% PVDF oder 10 Gew.-% PVDF gebildet worden sein.

In der Figur 2 wird eine erste Form 4 gezeigt, die für die Herstellung der Referenzelektrode 1 verwendet werden kann. Die Form 4 kann eine halbzylinderförmige Vertiefung 5 aufweisen. Die halbzylinderförmige Vertiefung 5 kann mit einer Aufschlämmung 6 gefüllt werden. Dies kann beispielsweise mit einer Spritze geschehen. Zum Beispiel nach einem ersten Antrocknen kann der Draht 2 mittig auf die Aufschlämmung 6 aufgelegt werden, wie dies aus der Figur 3 ersichtlich ist. Es kann eine solche zweite Form 4 mit einer Aufschlämmung 6 gefüllt werden. Zum Beispiel nach einem ersten Antrocknen kann die zweite Form 4 mit der ersten Form 4 so verbunden werden, dass die zylinderförmige Ummantelung 3 für den Draht 2 entstehen kann. Dies wird in der Figur 4 gezeigt. Die zweite Form 4 kann beispielsweise mit der ersten Form 4 verklammert werden.

Ein erste Trocknungsschritt kann erfolgen, nachdem Formen zusammengeklemmt wurden.

Die beiden verbundenen Formen 4 können eine Zylinderhohlform mit einem Durchmesser vom 1 mm bilden. Es kann im Anschluss daran zum Beispiel 24 Stunden lang getrocknet werden. Es können zwei weitere Formen 4 verwendet werden, die eine Zylinderhohlform mit einem Durchmesser vom 2 mm bilden können. In eine weitere, mit einer Aufschlämmung teilgefüllte Form 4 kann die Referenzelektrode mit dem Durchmesser von 1 mm mittig eingelegt werden, dass diese 0,5 mm heraussteht. Die andere weitere, mit Aufschlämmung teilgefüllte Form kann mit der ersten weiteren Form so verbunden werden, dass eine Referenzelektrode mit einer Ummantelung 3 durch weiteres Trocknen hergestellt werden kann, die einen Durchmesser von 2 mm aufweist.

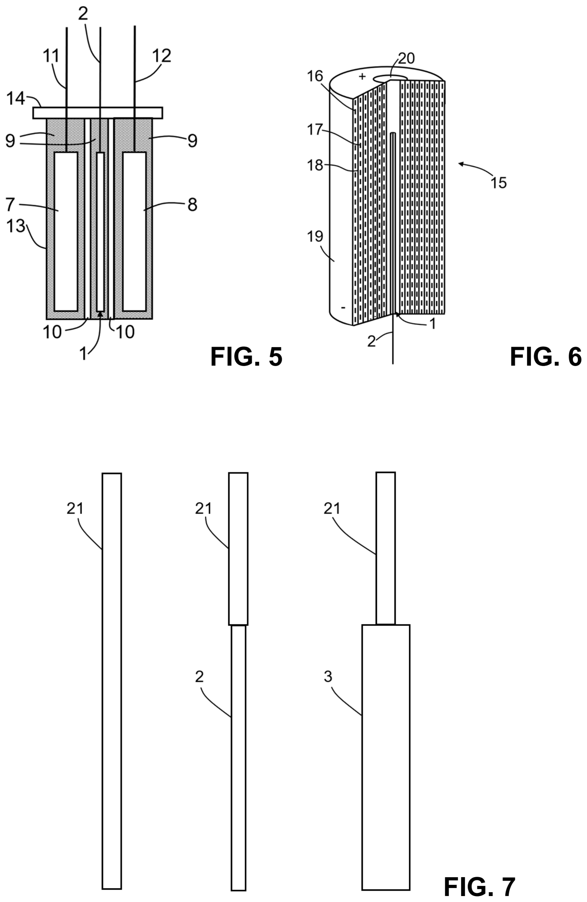

In der Figur 5 wird eine Zelle gezeigt, mit der im Anschluss an das Trocknen eine Referenzelektrode 1 aktiviert werden kann. Die Zelle kann eine erste Gegenelektrode 7 umfassen. Die Zelle kann eine zweite Gegenelektrode 8 umfassen. Die Referenzelektrode 1 kann zwischen den beiden Gegenelektroden 7 und 8 angeordnet sein. Ist die Referenzelektrode 1 zwischen zwei Gegenelektroden 7 angeordnet, dann ist dies mit dem Vorteil verbunden, dass die Referenzelektrode von zwei Seiten beladen und entladen werden kann. Damit die Referenzelektrode 1 lithiiert werden kann, umfasst eine Gegenelektrode 7, 8 Lithium. Lithiumionen können für die Lithiierung in die Referenzelektrode 1 hineingelangen. Für die Delithiierung können Lithiumionen aus der Referenzelektrode 1 herausgelangen.

Damit Lithiumionen zwischen einer Gegenelektrode 7, 8 und der Referenzelektrode 1 wandern können, kann die Zelle ein Elektrolyt 9 vorgesehen sein. Ein Lithiumion kann dann von einer Gegenelektrode 7, 8 durch den Elektrolyten 9 hindurch zur Referenzelektrode 1 wandern und zurück. Dies kann durch Anlegen einer jeweils geeigneten elektrischen Spannung oder Strom an elektrische Leiter 2, 11 und 12 bewirkt werden, die mit den Elektroden 1, 7, 8 verbunden sind.

Es können auch mehr als zwei Gegenelektroden 7 vorgesehen sein, die um die Referenzelektrode 1 herum angeordnet werden, um die Referenzelektrode 1 von verschiedenen Seiten laden und beladen zu können. Es kann eine zylindrische Gegenelektrode 7 vorgesehen sein, um eine innerhalb der zylindrischen Gegenelektrode 7 angeordnete Referenzelektrode 1 von mehreren Seiten aus beladen und entladen zu können.

Die in der Figur 5 gezeigte Zelle kann noch ein oder zwei Separatoren 10 umfassen, die die Elektroden mechanisch voneinander trennen. Das Material der Separatoren 10 ist für Lithiumionen durchlässig. Die in der Figur 5 gezeigte Zelle kann einen Behälter 13 umfassen, der durch eine Abdeckung 14 verschlossen sein kann.

Die in der Figur 5 gezeigte Zelle kann noch eine vierte Elektrode als Messelektrode umfassen, um Messungen während einer Aktivierung durchzuführen, mit denen der Verlauf einer Aktivierung bestimmt werden kann. Ist aber bekannt, wie eine gewünschte Aktivierung zuverlässig erreicht wird, so können Messungen während einer Aktivierung und/oder in einer Aktivierungszelle entfallen. Die Messelektrode kann aus Lithiummetall gebildet sein.

Für eine Aktivierung muss nicht zwingend eine separate Zelle, wie diese in der Figur 5 gezeigt wird, verwendet werden. Eine Aktivierung kann auch innerhalb eines dafür vorbereiteten Akkumulators erfolgen.

Für eine Aktivierung kann ein Strom mit einer Stromstärke von mehr als 0,05 A und/oder weniger als 0,5 A fließen. Für eine Aktivierung kann ein Strom mit einer C-Rate von mehr als C/100 und/oder weniger als C/2 fließen. Eine dafür benötigte Spannung kann wenigstens 0,5 Volt und/ oder nicht mehr als 4 Volt betragen. Eine geeignete Stromstärke hängt von der Kapazität der Referenzelektrode ab. Eine geeignete Stromstärke kann daher auch anders sein.

Die Zeit, die für eine Formierung und/oder Aktivierung aufgewendet werden muss, kann mehr als 24 Stunden oder mehr als 50 Stunden betragen. Die Zeit, die für eine Aktivierung aufgewendet werden muss, kann weniger als 600 Stunden oder weniger als 500 Stunden oder weniger als 300 Stunden oder weniger als 250 Stunden betragen.

Auf diese Weise kann beispielsweise eine Referenzelektrode formiert und/oder aktiviert werden, die LTO als aktives Material umfasst. Während der Aktivierung kann beispielsweise bei einer Spannung von ca. 1,55 Volt dann ein flaches Spannungsplateau beobachtet werden. Im letzten Schritt kann die Referenzelektrode dann so aufgeladen werden, dass der Ladezustand dann in etwa in der Mitte des flachen Spannungsplateaus liegt. Aus diesem Grund kann eine Referenzelektrode deshalb auf einen Ladezustand von etwa 50% aufgeladen werden.

Zumindest im Anschluss an die Aktivierung verfügt die Referenzelektrode 1 über ein Elektrodenpotential mit gewünschten Eigenschaften.

In der Figur 6 wird in einer Schnittdarstellung ein Akkumulator 15 mit einer zentral eingebauten Referenzelektrode 1 gezeigt. Der Akkumulator 15 umfasst abwechselnd Anoden 16 und Kathoden 17, die zylinderförmig gewickelt sein können. Die Anoden 16 und die Kathoden 17 können durch Separatoren 18 voneinander getrennt sein. Der Akkumulator 15 kann ein Gehäuse 19 umfassen, das ansonsten mit einem Elektrolyten gefüllt ist. Die Oberseite des Akkumulators 15 kann einen Pluspol 20 aufweisen. Die Unterseite des Akkumulators 15 kann einen Minuspol aufweisen. Ein vom Elektrolyten abgeschirmter elektrischer Kontakt 2 der Referenzelektrode 1 kann beispielsweise nach unten aus dem Akkumulator 15 herausgeführt sein. Damit der elektrische Kontakt 2 zuverlässig vom Elektrolyten abgeschirmt ist, kann der elektrische Kontakt ein Draht 2 sein, der außerhalb der getrockneten Aufschlämmung 3 mit einem isolierenden Material beschichtet ist. Innerhalb der getrockneten Aufschlämmung 3 ist der Draht 2 dann zumindest teilweise nicht mit dem isolierenden Material beschichtet. Der Draht 2 kann außerhalb der getrockneten Aufschlämmung 3 mit einer Keramik oder einem Polymer beschichtet sein. Als Beschichtung kann ein Emaillelack vorgesehen sein.

Es ist möglich, eine Referenzelektrode in einen vorhanden Akkumulator einzubauen, so zum Beispiel in eine 21700 Zelle. Es kann beispielsweise ein kleines Loch am Boden einer 21700-Zelle gebohrt werden und die Referenzelektrode kann in der Mitte der 21700-Zelle beispielsweise unter einer Argonumgebung platziert werden. Anschließend kann der Akkumulator durch das gebohrte Loch hindurch mit Elektrolyt gefüllt werden, um einen ionischen Kontakt zwischen der Zelle und der Referenzelektrode herzustellen. Abschließend kann das gebohrte Loch mithilfe eines chemisch stabilen Zweikomponentenklebers versiegelt werden. Versuche haben gezeigt, dass Zellen vor und nach einer solchen Integration einer zylindrischen Referenzelektrode mit einem Durchmesser von 2 mm in einer 21700-Zelle keine Kapazitätsunterschiede aufweisen.

Es ist möglich, eine Referenzelektrode während der Herstellung eines Akkumulators einzubauen.

In der Figur 7 wird eine mögliche Herstellung einer Referenzelektrode 1 gezeigt, die außerhalb einer getrockneten Aufschlämmung 3 einen beschichteten, Draht 21 aufweisen kann. Ausgangspunkt kann ein links gezeigter, beschichteter, beispielsweise 10 cm oder 11 cm langer Draht 21 sein. Zunächst kann ein Teil dieses beschichteten Drahts 21 so bearbeitet werden, dass die Beschichtung teilweise entfernt wird und anschließend ein freiliegender Draht 2 zugänglich ist. Dies wird in der Mitte der Figur 7 gezeigt. Im Anschluss kann der freiliegender Draht 2 des beschichteten Drahtes 21 mit einer Aufschlämmung 6 beschichtet und anschließend die Aufschlämmung 6 getrocknet werden. Dies wird in der Figur 7 rechts gezeigt. Die Beschichtung kann dazu dienen, einen nachteilhaften Kontakt zwischen dem Draht 2 und einem Elektrolyten eines Akkumulators zu vermeiden.

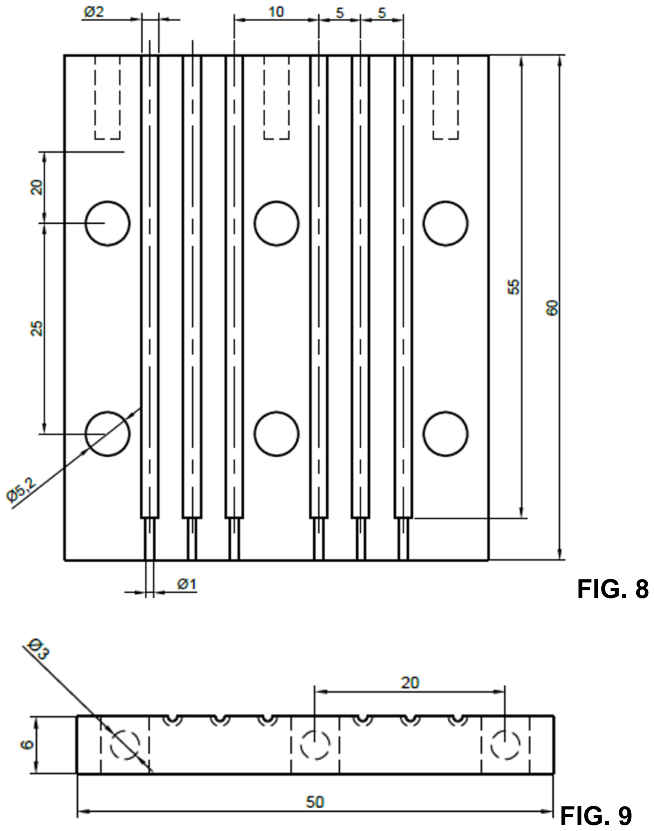

Die Figuren 8 und 9 zeigen technische Zeichnungen einer Form, die aus Teflon bestehen kann, um eine Aufschlämmung gießen zu können. Die Maße sind in mm angegeben. Zwei solcher Formen werden für die Herstellung wie zuvor beschrieben benötigt. Die Form ist für die Herstellung von sechs Referenzelektroden ausgelegt. Vor dem Befüllen mit einer Aufschlämmung kann eine Form beispielsweise mit einem Ölfilm beschichtet werden, um eine spätere Entnahme zu erleichtern.

Eine Aufschlämmung mit aktivem Material, leitfähigem Kohlenstoff und Bindemittel kann im gewünschten Verhältnis hergestellt werden. Eine gewisse Menge Lösungsmittel wie zum Beispiel NMP kann hinzugefügt werden, um die Aufschlämmung hinreichend flüssig zu machen. Die Aufschlämmung kann dann auf einen unbeschichteten Teil eines Kupfer-Drahts aufgetragen werden. Bei Bedarf kann der Draht durch Tauchbeschichten vorbeschichtet werden.

Zwei der in den Figuren 8 und 9 gezeigten Formen können bei Bedarf demontiert und gründlich von innen und außen gereinigt werden. Sind zwei Formen demontiert, also voneinander getrennt, dann kann mit einer Spritze die Aufschlämmung zunächst langsam in die dafür vorgesehenen Vertiefungen einer Form gegossen werden und anschließend ebenso in die dafür vorgesehenen Vertiefungen der anderen Form. Anschließend kann der (vorbeschichtete) Kupfer-Draht in die Mitte einer Seite der Form gelegt und so angedrückt werden, dass der Draht gut in der Aufschlämmung liegt. Anschließend können die beiden Formteile zusammengesetzt und beispielsweise mit Schrauben und Flügelmuttern zusammengeklemmt werden.

Nachdem die Aufschlämmung in die Formen gegossen wurde, können die Formen für 24 Stunden in einen Abzug und dann für mehr als 24 Stunden in einen Vakuumofen bei 80 °C getrocknet werden. Schließlich können die vorbereiteten Referenzelektroden aus den Formen genommen und 24 Stunden lang im Ultrahochvakuumofen bei 120 °C getrocknet werden.

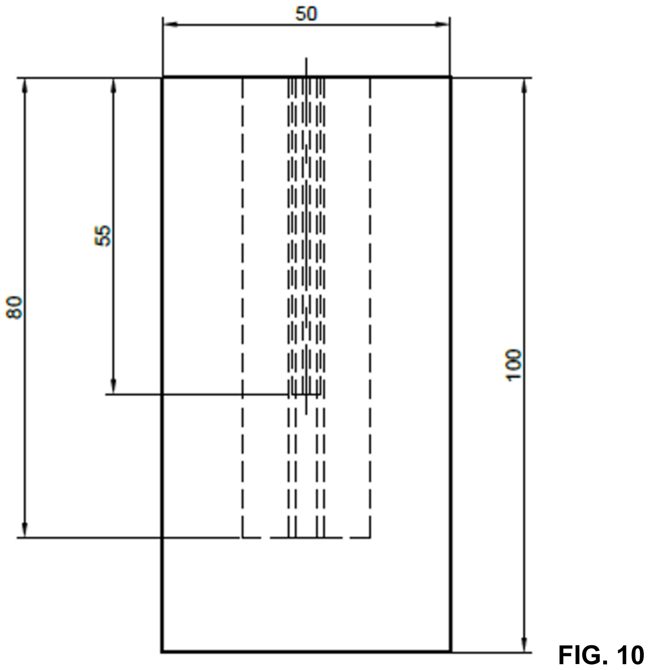

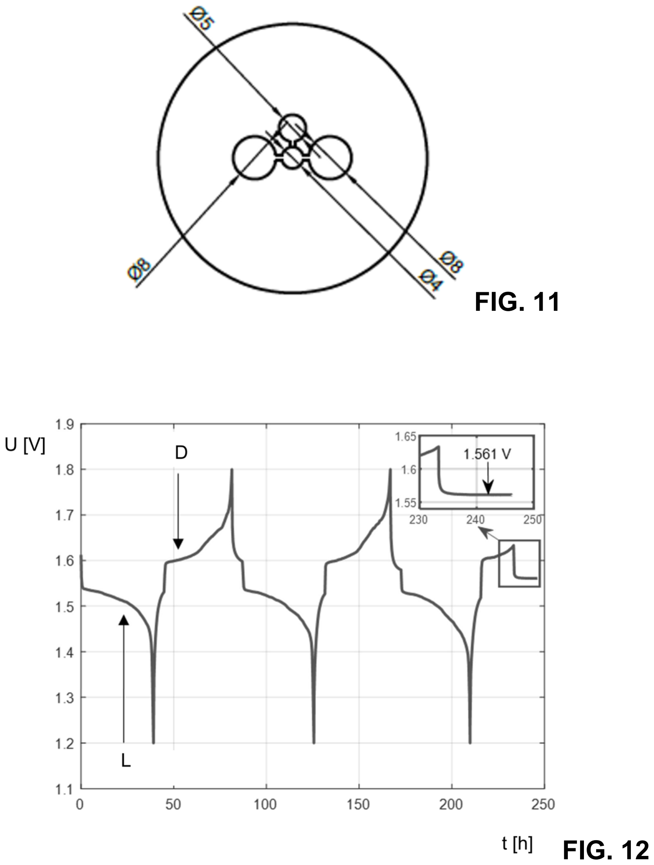

In den Figuren 10 und 11 werden technische Zeichnungen für eine Zelle gezeigt, mit der eine Formierung und/oder Aktivierung durchgeführt werden kann. Die Maße sind in Millimeter angegeben. Die Zelle ist für eine Referenzelektrode, zwei Gegenelektroden und eine Messelektrode eingerichtet. Auch die Messelektrode kann aus Lithium bestehen. Der Durchmesser der zwei Referenzelektroden kann zweckmäßig größer sein als der Durchmesser der mittig angeordneten Referenzelektrode, wie dies aus den Figuren 10 und 11 gefolgert werden kann. Der Durchmesser der seitlich neben der Referenzelektrode angeordneten Messelektrode kann zweckmäßig größer sein als der Durchmesser der Referenzelektrode, wie dies aus den Figuren 10 und 11 gefolgert werden kann. Der Durchmesser der seitlich neben der Referenzelektrode angeordneten Messelektrode kann zweckmäßig kleiner sein als der Durchmesser der Gegenelektroden, wie dies aus den Figuren 10 und 11 gefolgert werden kann.

Die Figur 12 verdeutlicht eine Formierung und Aktivierung einer Referenzelektrode. Aufgetragen L bezieht sich auf eine Phase der Lithiierung. D bezieht sich auf eine Phase der Delithiierung. Aufgetragen ist Spannung in Volt U [V] gegenüber Zeit in Stunden t [h]. Am Ende wird die Referenzelektrode auf 50% Ladezustand geladen. Danach in der Relaxionsphase geht die Spannung auf 1.561 V (entspricht ca. 1.55 V).

Am Ende wird die Referenzelektrode auf 50% Ladezustand geladen, und danach in der Relaxionsphase geht die Spannung auf 1.561 V (entspricht ca. 1.55 V). Der Ladezustand kann auch auf einen anderen Wert als 50 % aufgeladen werden, solange der stabile und flache Plateaubereich erreicht wird.

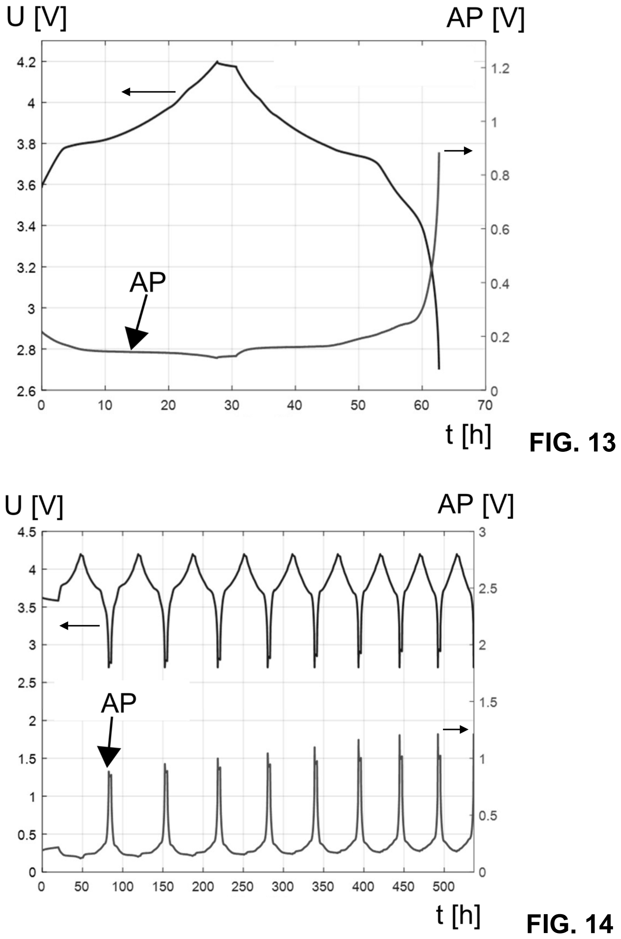

In den Figuren 13 und 14 ist einerseits Spannung in Volt U [V] gegenüber Zeit in Stunden t [h] aufgetragen. Andererseits ist ein Anodenpotential in Volt AP [V] gegenüber Zeit in Stunden t [h] aufgetragen. Der Kurvenverlauf AP in Figur 13 zeigt den Verlauf des Anodenpotentials nach einem Zyklus einer LTO Elektrode versus Anode. Der andere Kurvenverlauf zeigt den Spannungsverlauf während Laden und Entladen einer Batteriezelle nach einem Zyklus. Die Figuren 13 und 14 beziehen sich auf den Fall einer in einen Akkumulator integrierten LTO Referenzelektrode, wobei die Spannung der Anode gemessen ist über die Referenzelektrode. Die Figuren 13 und 14 verdeutlichen das Funktionieren der Erfindung.

**Patentansprüche**

1. Verfahren zur Herstellung einer Referenzelektrode (1), wobei eine Aufschlämmung (6) mit aktivem Material, elektrisch leitendem Material und Bindemittel zur Herstellung der Elektrode wenigstens 12 Stunden lang getrocknet wird.

2. Verfahren nach dem vorhergehenden Anspruch, **dadurch gekennzeichnet, dass** die Aufschlämmung (6) für das Trocknen einem Unterdruck ausgesetzt wird.

3. Verfahren nach dem vorhergehenden Anspruch, **dadurch gekennzeichnet, dass** die Temperatur während der Trocknung im Unterdruck wenigstens 12 Stunden lang zwischen 15°C und 40°C liegt.

4. Verfahren nach dem vorhergehenden Anspruch, **dadurch gekennzeichnet, dass** im Anschluss an das Trocknen bei der Temperatur zwischen 15°C und 40°C bei einer Temperatur wenigstens 12 Stunden lang getrocknet wird, die zwischen 40°C und 100°C liegt.

5. Verfahren nach dem vorhergehenden Anspruch, **dadurch gekennzeichnet, dass** im Anschluss an das Trocknen bei der Temperatur zwischen 40°C und 100°C bei einer Temperatur wenigstens 12 Stunden lang getrocknet wird, die zwischen 100°C und 140°C liegt.

6. Verfahren nach einem der vorhergehenden Ansprüche, **dadurch gekennzeichnet, dass** die Aufschlämmung zusammen mit einem darin teilweise befindlichen Stromkollektor getrocknet wird.

7. Verfahren nach dem vorhergehenden Anspruch, **dadurch gekennzeichnet, dass** der Stromkollektor ein teilweise beschichteter Draht (2) ist.

8. Verfahren nach dem vorhergehenden Anspruch, **dadurch gekennzeichnet, dass** der Draht (2) 100 Mikrometer bis 300 Mikrometer dick ist und der Draht (2) 40 mm bis 70 mm lang ist.

9. Verfahren nach einem der vorhergehenden Ansprüche, **dadurch gekennzeichnet, dass** die Aufschlämmung (6) vor dem Trocknen eine Schicht auf dem Stromkollektor bildet, die 0,5 mm bis 3 mm dick ist.

10. Verfahren nach einem der vorhergehenden Ansprüche, **dadurch gekennzeichnet, dass** das Verhältnis von aktivem Material, Kohlenstoff und Bindemittel zwischen 60:20:20 und 80:10:10 liegt.

11. Verfahren nach einem der vorhergehenden Ansprüche, **dadurch gekennzeichnet, dass** nach dem Trocknen die Referenzelektrode (1) aktiviert wird.

12. Verfahren nach einem der vorhergehenden Ansprüche, **dadurch gekennzeichnet, dass** die Aufschlämmung (6) LFP oder LTO als aktives Material und Kohlenstoff als elektrisch leitendes Material und Polyvinylidenfluorid, Carboxymethylcellulose, Polyethylen oder Polytetrafluorethylen als Bindemittel umfasst.

13. Akkumulator mit einer Anode (16), einer Kathode (17), einem Elektrolyten und einer Referenzelektrode (1), die nach einem Verfahren mit den Merkmalen von einem der vorhergehenden Ansprüche herstellbar ist, wobei die Referenzelektrode (1) zylinderförmig ist und aus aktivem Material, elektrisch leitendem Material und Bindemittel gebildet ist und im Inneren einen aus Metall bestehenden Draht (2) als Stromkollektor umfasst.

**14.** Akkumulator nach dem vorhergehenden Anspruch, **dadurch gekennzeichnet, dass** die Referenzelektrode (1) LFP oder LTO als aktives Material umfasst.

**15.** System mit einem Akkumulator (15) nach einem der beiden vorhergehenden Ansprüche und einem Batteriemanagementsystem, das in Abhängigkeit von der Referenzelektrode (1) das Laden des Akkumulators (15) steuert und/oder den Akkumulator (15) überwacht.

FIG. 1

FIG. 2

FIG. 3

FIG. 4

**FIG. 5**

**FIG. 6**

**FIG. 7**

FIG. 8

FIG. 9

**FIG. 10**

**FIG. 11**

U [V]

D

L

1.561 V

t [h]   **FIG. 12**

FIG. 13

FIG. 14